# EUROPÄISCHE PATENTANMELDUNG

(11) **EP 0 524 389 A1**
(43) Veröffentlichungstag der Anmeldung: **27.01.1993**
(21) Anmeldenummer: 92108111.3
(22) Anmeldetag: 14.05.1992
(51) Int. Cl.: E04B 1/68

(54) **Injektionsschlauch für Fugen an Bauwerken**

(30) Priorität: 25.07.1991 DE 4124628
(71) Anmelder: BBZ- BETONBAU- ZUBEHÖRHANDELSGESELLSCHAFT mbH, D-47877 Willich (DE)
(72) Erfinder: Müller, Werner, c/o Keil & Schaafhausen, W-6000 Frankfurt am Main 1 (DE)
(74) Vertreter: Keil, Rainer A., Dipl.-Phys. Dr.

(57) **Zusammenfassung**

Die Erfindung betrifft einen Injektionsschlauch (1) für Fugen an Bauwerken mit einem im wesentlichen flüssigkeitsundurchlässigen, einen Durchtrittskanal (3) umschließenden Grundkörper, (2) welcher über seine Länge verteilt in seiner Wandung Austrittsöffnungen (6) für Injektionsflüssigkeit aufweist, und mit einer den Grundkörper (2) umhüllenden Folie (8). Die Längsverteilung der Injektionsflüssigkeit in der Fuge wird bei guter Drucksteifigkeit und Biegeflexibilität des Injektionsschlauchs (1) erfindungsgemäß dadurch verbessert, daß der Grundkörper (1) ein über seine gesamte Länge durchlaufendes, vorzugsweise schrauben linienförmiges Rippenprofil (4) aufweist.

## Beschreibung

Die Erfindung betrifft einen Injektionsschlauch für Fugen an Bauwerken, insbesondere Betonbauwerken mit einem im wesentlichen flüssigkeitsundurchlässigen, einen Durchtrittskanal umschließenden schlauchartigen Grundkörper, welcher über seine Länge verteilt in seiner Wandung Austrittsöffnungen für Injektionsflüssigkeit aufweist, und mit einer den Grundkörper umhüllenden Folie.

Injektionsschläuche der gattungsgemäßen Art werden in Arbeits- und Bewegungsfugen von Bauwerken bei der Erstellung der Bauwerke mit einbetoniert. Bei Undichtigkeit der Fugen wird eine Injektionsflüssigkeit in den Injektionsschlauch gepreßt, welche durch die Austrittsöffnungen in den Fugenbereich gelangt und aufgrund chemischer Reaktionen innerhalb des Fugenraumes aushärtet und diesen sowie anschließende Risse gegen den Durchgang von Flüssigkeiten und/oder Gasen abdichtet. Die Umhüllung soll verhindern, daß beim Betoniervorgang Betonbestandteile in den Schlauch gelangen und diesen verstopfen. Dabei muß sichergestellt sein, daß die Umhüllung den Austritt des durch den Schlauch in die Fuge zu injizierenden Füllmaterials nicht behindert. Ebenso wichtig ist, daß der Schlauch durch im rauhen Baubetrieb auf ihn einwirkende Belastungen nicht zusammengedrückt oder gar zerstört wird, und daß beim Verlegen in über Eck verlaufenden Fugen an den Knickstellen keine Risse im Schlauch auftreten, durch welche die Injektionsflüssigkeit unkontrolliert austreten, d.h. die Verteilung der Injektionsflüssigkeit über die gesamte Fugenlänge beeinträchtigt werden könnte.

Es sind bspw. unter Putz zu verlegende Rohre zur Durchführung von Elektrokabeln bekannt, welche Rippenprofile aufweisen.

Auch Drainagerohre, welche der Entwässerung des Bodens dienen, bspw. Rohre mit einem ringförmigen Rippenprofil, sind bekannt (vgl. DE-GM 72 41 052). Die AT-PS 26 51 46 zeigt ein Drainagerohr mit wellenförmigen schraubenlinienförmig zur Rohrachse verlaufender Wandung.

Aus der DE-OS 35 12 470 ist ein Injektionsschlauch bekannt, welcher gegen den von außen wirkenden Druck durch eine im Vergleich zum Schlauchdurchmesser relativ große Wandstärke geschützt ist. Dies erfordert einen erhöhten Materialbedarf und führt zu einer Verringerung der Biegeflexibilität und Verlegbarkeit. Die DE-OS 39 36 721 zeigt und beschreibt einen Injektionsschlauch, bei dem auf einen außen und innen glatten Grundkörper mit radialen Öffnungen für den Austritt von Injektionsflüssigkeit eine umhüllende Folie aufgebracht ist. Auch hier kann die erforderliche Drucksteifigkeit des Grundkörpers lediglich über eine Erhöhung der Wandstärke oder eine gesonderte Stützspirale erreicht werden.

Aufgabe der Erfindung ist es daher, einen gattungsgemäßen Injektionsschlauch zu verbessern. Die Verbesserung soll insbesondere darin bestehen, daß mit geringem Material- und Konstruktionsaufwand eine ausreichende Drucksteifigkeit bei guter Biegeflexibilität und damit Verlegbarkeit erzielt sowie die Verteilung der Injektionsflüssigkeit über die Länge des Schlauches erreicht wird.

Diese Aufgabe wird mit der Erfindung u.a. dadurch gelöst, daß der Grundkörper ein über seine gesamte Länge durchlaufendes Rippenprofil aufweist.

Dies bedeutet, daß das Rippenprofil über einen wesentlichen Teil seiner Länge eine Komponente in Schlauchlängsrichtung aufweisen soll. Die Rippen sollen also bspw. nicht ausschließlich ringförmig verlaufen. Dadurch ist es möglich, den Grundkörper unter Materialersparnis relativ dünnwandig herzustellen. Um gleichzeitig eine ausreichende Drucksteifigkeit zu gewährleisten wird die Verteilung der Injektionsflüssigkeit über die gesamte Länge des Rohres gefördert, so daß die Funktionsfähigkeit des Induktionsschlauches erhalten bleibt, auch wenn die eine oder andere Austrittsöffnung verstopft sein sollte.

Das Rippenprofil kann auf der Außenfläche der Wandung des Grundkörpers, auf der Innenfläche der Wandung des Grundkörpers oder auf der Außenfläche und der Innenfläche der Wandung des Grundkörpers vorgesehen sein, in letzterem Falle vorzugsweise in der Art, daß die Wandung überall im wesentlichen gleiche Wandstärke hat.

Im Rahmen der Verwirklichung des Erfindungsgedankens ist es zweckmäßig, daß das Rippenprofil vorzugsweise über die gesamte Länge des Grundkörpers schraubenlinienförmig verläuft. Dadurch wird auf besonders einfache Weise erreicht, daß die Injektionsflüssigkeit mittels des Rippenprofils zuverlässig über die gesamte Länge der abzudichtenden Fuge verteilt wird und eine hohe Biegeflexibilität bei guter Druckfestigkeit sichergestellt ist.

Bei einer anderen Ausgestaltung des Erfindungsgedankens verläuft das Rippenprofil vorzugsweise über die gesamte Länge des Grundkörpers in oder im wesentlichen in Längsrichtung des Grundkörpers. Ein solches Rippenprofil läßt sich einfacher, und damit billiger herstellen als ein schraubenlinienförmiges Rippenprofil, weist aber eine geringere, allerdings in vielen Fällen immer noch ausreichende Drucksteifigkeit und Biegeflexibilität auf.

Auch hier kann das Rippenprofil auf der Außenfläche, auf der Innenfläche oder auf Außenfläche und Innenfläche der Wandung des Grundkörpers vorgesehen sein. In besonderer Ausgestaltung der Erfindung besteht das Rippenprofil jedoch aus Rippen und/oder Nuten bei vorzugsweise im wesentlichen gleicher Wandstärke des Grundkörpers über Umfang und Länge gesehen.

In Weiterbildung der Erfindung sind die Austrittsöffnungen - von außen gesehen - in den Nuten angeordnet. Dadurch liegen die Austrittsöffnungen geschützt.

Dabei sind die Austrittsöffnungen vorzugsweise als in Längsrichtung des Grundkörpers verlaufende Schlitze ausgebildet, wodurch zusätzlich die Verteilung der Injektionsflüssigkeit über die Länge des Rippenprofils und damit des Injektionsschlauchs und der abzudichtenden Fuge verbessert wird.

Um ein Verstopfen der Schlitze bis zur Injektion auf umweltschonende Weise zuverlässig zu vermeiden, besteht die den Grundkörper umhüllende Folie vorzugsweise aus einem wasserlöslichen oder zumindest beschränkt wasserlöslichen Polymer, bspw. einem thermoplastischen Acrylpolymer, das durch eine polymerisierte Carboxylgruppe hydrophil gemacht wurde. Auch Polyvinylalkohol, stärkebasierende Polymere, Polyvinylacetamide, Polyvinylpyrrolidon, Hydoxyzellulose, Reaktionsprodukte aus Acrylverbindungen, Vinyläthern und Anhydriden, wie z.B. Maleinsäureanhydrid, kommen unter bestimmten Bedingungen in Betracht. Durch Einwirkung eines in dem Wasser der Injektionsflüssigkeit gelösten oder in dem Polymer der Folie oder dem Grundkörper eingearbeiteten Lösungsvermittlers, z.B. eines Neutralisiationsmittels wie Natriumcarbonat (Soda), kann die Folie leicht gelöst werden, so daß die Injektionsflüssigkeit durch die bis dahin geschützten und jetzt freigegebenen Austrittsöffnungen ohne weiteres in die abzudichtende Fuge austreten kann. Beim Auflösevorgang der Folie entstehen Polyelektrolyte, wie sie in der Abwasserbehandlung und in der Agrarchemie verwendet werden. Ähnliche Polyelektrolyte werden in großem Umfang als Waschhilfsmittel, Flockungsmittel und Bodenverbesserer eingesetzt und bergen nach gegenwärtigem Erkenntnisstand keinerlei Risiken für Mensch und Umwelt.

Bei einer bevorzugten Ausführungsform der Erfindung besteht die Folie aus Gelatine. Die Gelatine kann mit geeigneten Enzymen besonders einfach aufgelöst werden; die als Spaltprodukte entstehenden Aminosäuren (= Eiweißbausteine) sind reinen Naturstoffen praktisch gleich und völlig unproblematisch abbaubar.

Die Stärke der Folie ist an sich beliebig, aus mechanischen Gründen ist sie jedoch vorzugsweise größer als 0,2 mm, aus wirtschaftlichen Gründen vorzugsweise aber kleiner als 1 mm.

Der Grundkörper kann aus flexiblem Material wie Gummi oder Kunststoff bestehen, um leichter den speziellen Einbaugegebenheiten angepaßt werden zu können.

Für besondere Anwendungen ist erfindungsgemäß vorgesehen, daß der Grundkörper aus Drahtgeweben oder einem perforierten Metallrohr besteht.

Die Folie kann auf den Grundkörper gewickelt werden. Erfindungsgemäß wird jedoch vorgeschlagen, die Folie durch Extrusion mittels einer Ringdüse auf den Grundkörper aufzubringen.

Dabei kann das Aufbringen der Folie auf den Grundkörper erfindungsgemäß ein- oder mehrlagig erfolgen.

Bei einer bevorzugten Weiterbildung der Erfindung erfolgt bei der Extrusion der Transport des Grundkörpers durch die Ringdüse schneller als das Aufbringen des Folienextrudats. Dadurch wird das Folienextrudat unter Zugbelastung gesetzt und etwas in die Nuten hineingezogen, wodurch sich die Beschädigungsgefahr der Folie beim Einbau verringert und die Stabilität des Injektionsschlauches erhöht.

Als Induktionsflüssigkeit für das Verpressen der abzudichtenden Fugen kommen im Rahmen der Erfindung organische Materialien, wie Epoxydharze, Polyurethanharze, Acryl/Metacrylharze und insbesondere verquellbare Materialien, wie Gele, in Betracht, ferner als anorganische Materialien Zementsuspensionen, Wasserglas, oder Kombinationen aus den zuvor genannten organischen und anorganischen Materialien.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Es zeigen:
- Fig. 1: einen Teillängsschnitt eines die Erfindung aufweisenden Injektionsschlauches mit schraubenlinienförmigem Rippenprofil,
- Fig. 2: einen Teilschnitt eines die Erfindung gemäß einer anderen Ausführungsform aufweisenden Injektionsschlauches mit Längsrippenprofil, und
- Fig. 3: einen Querschnitt des Injektionsschlauches nach Fig. 2.

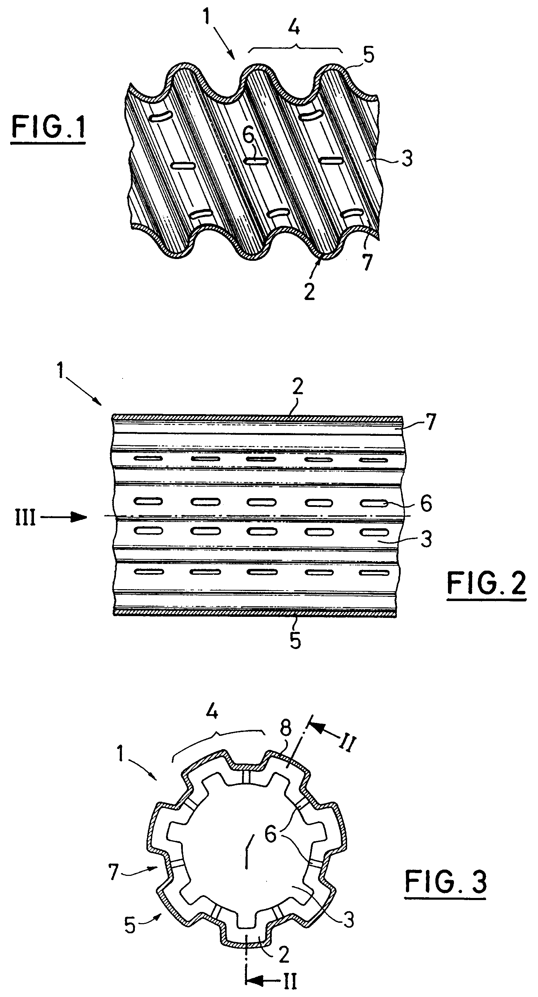

Der Injektionsschlauch 1 gemäß Fig. 1 besteht aus einem Grundkörper 2, der eine im wesentlichen hohlzylindrische Wandung hat, welche einen durchgehenden im wesentlichen zylindrischen Durchtrittskanal 3 uumschließt. Dem Durchtrittskanal 3 wird an einem oder beiden Enden des Injektionsschlauches 1 bzw. ggf. auch an dazwischen vorgesehenen Anschlüssen Injektionsflüssigkeit zugeführt, um sie über der Länge der abzudichtenden Arbeits- oder Bewegungsfugen zu verteilen, welcher der Injektionsschlauch zugeordnet ist.

Beim Ausführungsbeispiel nach Fig. 1 weist der Injektionsschlauch 1 ein schraubenlinienförmiges Rippenprofil 4 auf, mittels dessen die Drucksteifigkeit des Injektionsschlauchs 1 erhöht und gleichzeitig eine höhere Biegeflexibilität erreicht wird. Da das schraubenlinienförmige Rippenprofil 4 über die gesamte Länge des Injektionsschlauchs 1 verläuft, wird die Verteilung der aus über die Länge des Grundkörpers 2 verteilten Austrittsöffnungen 6 in die Fuge austretenden Injektionsflüssigkeit in Längsrichtung des Injektionsschlauches 1 und damit der Fuge gefördert. Das Rippenprofil 4 ist aus Rippen 5 und dazwischenliegenden Nuten 7 bei im wesentlichen gleichbleibender Wandstärke des Grundkörpers 2 gebildet; es liegen also Rippenprofile sowohl auf der Innenfläche als auch auf der Außenfläche der Wandung des Grundkörpers vor.

Anstelle eines schraubenlinienförmigen Rippenprofils 4 kann der Injektionsschlauch 1 auch mit im wesentlichen in Richtung der Rohrlängsachse verlaufenden Rippen 5 und zwischen ihnen frei bleibende Nuten 7, wie in den Fig. 2 und 3 gezeigt, ausgebildet sein. Dadurch werden die Herstellungskosten des Injektionsschlauchs 1 verringert, dieser erreicht jedoch nur eine geringere, jedoch in vielen Fällen ebenfalls ausreichende Drucksteifigkeit und Biegeflexibilität. Auch hierbei sind über die Länge und den Umfang des Grundkörpers 2 Austrittsöffnungen 6 in gleichmäßigen Winkelabständen verteilt, die jeweils den Durchtrittskanal 3 mit der Umgebung des Grundkörpers 2, d.h. der abzudichtenden Fuge, verbinden. Die Austrittsöffnungen 6 sind auch hier in den Nuten 7 - von außen gesehen - zwischen den Rippen 5 des Grundkörpers 2 angeordnet.

Die Austrittsöffnungen 6 sind in beiden Ausführungsbeispielen als in Längsrichtung des Grundkörpers 2 verlaufende Schlitze ausgebildet, deren Enden sich, wenn sie zueinander gestaffelt angeordnet sind - zweckmäßigerweise zumindest leicht überlappen, um sicherzustellen, daß - jedenfalls bei unverstopften Austrittsöffnungen 6 - die Injektionsflüssigkeit gleichmäßig über die gesamte Länge des Injektionsschlauchs 1 austreten kann.

Als Material für den Grundkörper 2 ist ein flexibles Material wie Gummi oder Kunststoff vorteilhaft. Bei besonderen Anwendungen kann der Grundkörper 2 jedoch auch aus Drahtgeweben oder perforierten Metallrohren bestehen.

Bei beiden Ausgestaltungen der Erfindung kann das Eindringen von Beton-Bestandteilen von außen in den Durchtrittskanal 3 und dadurch ein Verstopfen des Durchtrittskanals 3 zuverlässig dadurch vermieden werden, daß der Grundkörper 2 bis zur Injektion von einer Folie 8 ummantelt ist, welche sich erst unter dem Einfluß des Injektionsmaterials auflöst und die Austrittsöffnungen 6 dann freigibt.

Die Folie 8 wird Zweckmäßig durch Extrusion über eine Ringdüse auf den Grundkörper 2 aufgebracht, kann aber auch maschinell gewickelt oder manuell aufgebracht werden. Die Folie 8 kann ein- oder mehrlagig aufgebracht werden und besteht zweckmäßig aus enzymlöslichen und/oder wasserlöslichen Polymeren, wie bspw. Polyvinylalkohol, stärkebasierenden Polymeren, Gelatine, Polyvinylacetamid, Polyvinylpyrolydon, Hydroxyzellulose, Acrylpolymeren und/oder Reaktionsprodukten aus Acrylverbindungen, Vinyläthern und Anhydriden, bspw. Maleinsäureanhydrid. Statt der genannten vollsynthetischen Polymere können als Folienmaterial auch halbsynthetische, wasserquellbare, wasserlösliche Polymere oder modifizierte Naturstoffe wie schwachvernetzte Gelatine verwendet werden.

Während der Extrusion läßt man zweckmäßigerweise den Schlauch etwas schneller durch die Ringdüse laufen, als Extrudat aufgebracht wird. Dadurch steht das Extrudat unter Zugbelastung und wird leicht in die Nuten zwischen den Rippen hineingezogen, wodurch der Injektionsschlauch 1 stabiler und die Folie 8 weniger reißanfällig wird.

Statt des in den Ausführungsbeispielen genannten Injektionsschlauches können selbstverständlich auch andere geeignete Schlauchmaterialien verwendet werden. Profilform und Abmaße des Grundkörpers sowie Anzahl, Anordnung und Form der Austrittsöffnungen können jedem gewünschten Verwendungszweck angepaßt werden.

### Bezugszeichenliste:

- 1: Injektionsschlauch
- 2: Grundkörper
- 3: Durchtrittskanal
- 4: Rippenprofil
- 5: Rippe
- 6: Austrittsöffnung
- 7: Nut
- 8: Folie

## Patentansprüche

1. Injektionsschlauch für die Abdichtung von Arbeitsfugen an Bauwerken, insbesondere Betonbauwerken, mit einem im wesentlichen flüssigkeitsundurchlässigen, einen Durchtrittskanal (3) umschließenden schlauchartigen Grundkörper (2), welcher über seine Länge verteilt in seiner Wandung Austrittsöffnungen (6) für Injektionsflüssigkeit aufweist, und mit einer den Grundkörper (2) umhüllenden Folie (8), dadurch gekennzeichnet, daß der Grundkörper (2) ein über seine gesamte Länge durchlaufendes Rippenprofil (4) aufweist.

2. Injektionsschlauch nach Anspruch 1, dadurch gekennzeichnet, daß das Rippenprofil (4) vorzugsweise über die gesamte Länge des Grundkörpers (2) schraubenlinienförmig verläuft.

3. Injektionsschlauch nach Anspruch 1 oder 2, dadurch gekennzeichnet, daß das Rippenprofil (4) vorzugsweise über die gesamte Länge des Grundkörpers (2) in oder im wesentlichen in Längsrichtung des Grundkörpers (2) verläuft.

4. Injektionsschlauch nach einem der Ansprüche 1 bis 3, dadurch gekennzeichnet, daß das Rippenprofil (4) aus Rippen (5) und/oder Nuten (7) besteht.

5. Injektionsschlauch nach einem der Ansprüche 1 bis 4, dadurch gekennzeichnet, daß die Austrittsöffnungen (6) in den Nuten (7) angeordnet sind.

6. Injektionsschlauch nach einem der Ansprüche 1 bis 5, dadurch gekennzeichnet, daß die Austrittsöffnungen (6) als in Längsrichtung des Grundkörpers (2) verlaufende Schlitze ausgebildet sind.

7. Injektionsschlauch nach einem der Ansprüche 1 bis 6, dadurch gekennzeichnet, daß die den Grundkörper (2) umhüllende Folie (8) aus einem wasserlöslichen Polymer bspw. einem thermoplastischen Acrylpolymer mit einpolymerisierten Carboxylgruppen besteht.

8. Injektionsschlauch nach einem der Ansprüche 1 bis 7, dadurch gekennzeichnet, daß die Folie (8) aus Gelatine besteht.

9. Injektionsschlauch nach einem der Ansprüche 1 bis 8, dadurch gekennzeichnet, daß die Stärke der Folie (8) zwischen 0,2 und 1 mm liegt.

10. Injektionsschlauch nach einem der Ansprüche 1 bis 9, dadurch gekennzeichnet, daß der Grundkörper (2) ganz oder teilweise aus flexiblem Matieral wie Gummi oder Kunststoff besteht.

11. Injektionsschlauch nach Anspruch 1 bis 10, dadurch gekennzeichnet, daß der Grundkörper (2) ganz oder teilweise aus Metall besteht.

12. Verfahren zur Herstellung eines Injektionsschlauches nach einem der Ansprüche 1 bis 11, dadurch gekennzeichnet, daß die Folie (8) durch Extrusion mittels einer Ringdüse auf den Grundkörper (2) aufgebracht wird.

13. Verfahren nach Anspruch 12, dadurch gekennzeichnet, daß die Folie (8) ein- oder mehrlagig aufgebracht wird.

14. Verfahren nach Anspruch 11 oder 12, dadurch gekennzeichnet, daß der Transport des Grundkörpers (2) durch die Ringdüse schneller erfolgt als das Aufbringen des Folienextrudats.
